# EUROPEAN PATENT SPECIFICATION

(11) **EP 2 061 183 B1**
(45) Date of publication and mention of the grant of the patent: **14.12.2011**
(21) Application number: 07785481.8
(22) Date of filing: 30.08.2007
(51) Int. Cl.: H04L 12/18

(54) **METHOD AND SYSTEM FOR SENDING AND PROCESSING MULTIMEDIA BROADCAST MULTICAST SERVICE**
VERFAHREN UND SYSTEM ZUM SENDEN UND VERARBEITEN EINES MULTIMEDIA-BROADCAST-MULTICAST-DIENSTES
PROCÉDÉ ET SYSTÈME D'ENVOI ET DE TRAITEMENT DE SERVICE DE DIFFUSION/MULTIDIFFUSION MULTIMÉDIA

(30) Priority: 01.09.2006 CN 200610127731
(43) Date of publication of application: 20.05.2009
(73) Proprietor: Huawei Technologies Co., Ltd., Longgang District, Shenzhen Guangdong 518129 (CN)
(72) Inventor: WANG, Junwei, Shenzhen, Guangdong 518129 (CN); ZHOU, Xiao, Shenzhen, Guangdong 518129 (CN)
(74) Representative: Gulde Hengelhaupt Ziebig & Schneider
(86) International application number: PCT/CN2007/070599
(87) International publication number: WO 2008/031355

(56) References cited:
- EP-A- 1 524 804
- CN-A- 1 531 286
- CN-A- 1 697 354
- US-A1- 2004 160 938
- US-A1- 2006 107 187
- 3RD GENERATION PARTNERSHIP PROJECT;: "Introduction of the Multimedia Broadcast Multicast Service (MBMS) in the Radio Access Network (RAN); Stage 2 (Release 6)" 3RD GENERATION PARTNERSHIP PROJECT;, [Online] 1 December 2005 (2005-12-01), XP002540224 Retrieved from the Internet: URL:http://www.quintillion.co.jp/3GPP/Spec s/25346-670.pdf> [retrieved on 2009-08-04]

## Description

### FIELD OF THE INVENTION

The present invention relates to communication, especially to a method and system for transmitting multimedia broadcast/multicast service.

### BACKGROUND

For efficient use of mobile communication network resources, the third Generation Partnership Project (3GPP) proposes Multimedia Broadcast/Multicast Service (MBMS) over the mobile communication network. The MBMS mainly refers to that the network transmits the same multimedia data to multiple receptors in the network. The MBMS as proposed by 3GPP can not only be used to realize multicast and broadcast of low rate plain text message, but also be used to realize multicast and broadcast of high speed multimedia service, hence conforming to the future development trend of mobile data communication.

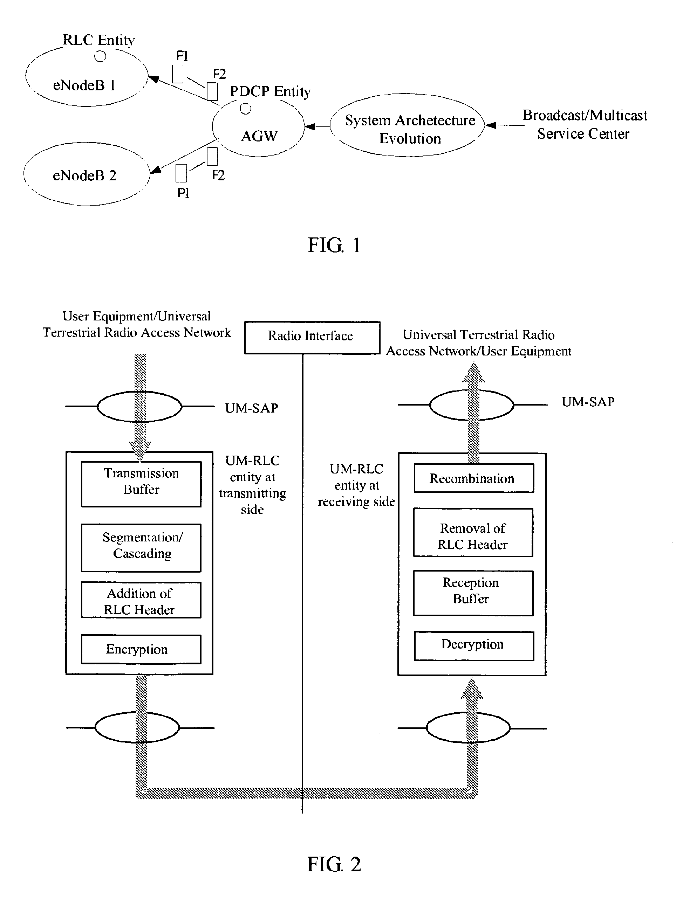

In the 3GPP Long Term Evolution (3GPP LTE) project, MBMS is an important service. In order to simplify the design of network structure, a concept of downlink single carrier is proposed nowadays, which means a carrier is separated for only transmitting MBMS and related control data while unicast data are not transmitted in the dedicated carrier. By using the separate downlink only carrier, systems operate on the same frequency, and all eNodeBs (Base Stations) transmit the same MBMS services synchronously. That is to say, a synchronized broadcast of same content as well as same modulating and encoding mode is realized. Fig. 1 shows a network architecture for transmitting MBMS packet according to the LTE.

In Fig. 1, several eNodeBs are under the control of an access gateway (AGW). Packets destined to the eNodeBs are forwarded to Radio Link Control (RLC) entities of the eNodeBs from a Packet Data Convergence Protocol (PDCP) entity of the AGW In this network, the AGW as a forwarding node at least has the PDCP function and the eNodeB as a transmitting node at least has the RLC function. The RLC protocol has a function of providing segmentation and retransmission services for users and control data. RLC entities are configured with Radio Resource Control (RRC) and operate in one of three modes, namely Transparency Mode (TM), Unacknowledged Mode (UM), and Acknowledged Mode (AM). In WCDMA, the RLC entity operates in the UM for the MBMS. Functions of RLC layer include segmentation, recombination, cascade and encryption.

Fig. 2 shows a process for two peer RLC entities to transmit MBMS in the unacknowledged Mode.

At the transmitting side, a transmitting Unacknowledged Mode Radio Link Control (UM-RLC) entity receives MBMS RLC Service Data Units (MBMS RLC SDUs) from a higher layer via an Unacknowledged Mode Service Access Point (UM-SAP). If the length of an RLC SDU is longer than the length of an Unacknowledged Mode Data Packet Data Unit (UMD PDU), the transmitting UM-RLC entity may segment the RLC SDU into multiple UMD PDUs of proper size. The UMD PDU may contain multiple segmented or cascaded RLC SDUs, and may be filled to ensure its effective length.

If encryption is enabled in the system, UMD PDUs may be encrypted (except for headers of the UMD PDUs) before they are transferred to a lower layer.

At the receiving end, a receiving UM-RLC entity receives the UMD PDUs from the lower layer via configured logic channels. The received packets may be added or deleted without changing contents in buffer.

If encryption is enabled in the system, the receiving UM-RLC entity may decrypt (if encryption function is already configured) the received UMD PDUs (except for the UMD PDU headers), remove RLC headers from the received UMD PDUs, and recombine the UMD PDUs into RLC SDUs.

There are disadvantages in the above-mentioned process for transmitting MBMS packet. When MBMS packets are transmitted downward from the PDCP to the RLC layer, packet loss might occur. However, there is no error detection and correction functions in prior art solutions, once an error occurs, the radio combining in physical layer can not take place smoothly.
EP 1524804 provides for a method of providing packetized data from a radio network controller of a wireless cellular telecommunication system to a base station. First a data packet is provided from the radio network controller to the base station for transmittal to user equipment. In case the data packets cannot be transmitted from the base station to the user equipment, the base station requests a renewed transfer of the data packet.

### SUMMARY

Embodiments of the present invention provide a method and system for transmitting multimedia broadcast/multicast service. The present invention overcomes the problem of transmission errors caused from packet loss during MBMS service transmission process.

The present invention is implemented by the following embodiments:
An embodiment of the present invention provides a method for transmitting multimedia broadcast/multicast service, wherein a network system providing the multimedia broadcast/multicast service in Multi-cell manner comprises an access gateway and an eNodeB The method comprises: checking, by the eNodeB, whether a packet loss occurs during the transmission of the multimedia broadcast/multicast service from the access gateway to the eNodeB; and notifying, by the eNodeB, upon losing a packet, a physical layer of the transmitting node not to transmit any data and wait until arrival of a next time for transmitting a next packet at the same time with other several base stations in several cells.

An embodiment of the present invention provides a system for transmitting multimedia broadcast/multicast service in Multi-cell manner, comprising an access gateway and an eNodeB. The system further comprises: a packet loss checking module adapted to check whether packet loss occurs during a transmission of packets from the access gateway to the eNodeB; and a packet loss handling module adapted to notify, upon checking a loss of packet by the packet loss checking module, a physical layer of the eNodeB not to transmit any data and wait until arrival of a next time for transmitting a next packet at the same time with other several base stations in several cells.

In the technical solutions provided in the embodiments of the present invention, by providing the packet loss checking module and the packet loss handling module, embodiments of the present invention realize checking and handling timely packet loss during transmission process of MBMS service, effectively prevents errors due to packet loss from spreading, guarantees that the terminals can receive MBMS service data correctly and thus ensures radio combining in the physical layer.

### BRIEF DESCRIPTION OF THE DRAWING

Fig. 1 is a schematic diagram illustrating a network architecture for transmitting MBMS packets according to prior art LTE;

Fig. 2 is a schematic diagram illustrating the transmission of MBMSs between two peer RLC entities in Unacknowledged Mode according to prior art;

Fig. 3 is a schematic diagram illustrating a method for processing MBMS data according to a first embodiment of the present invention;

Fig. 4 is a flowchart diagram illustrating operations of the method according to the first embodiment of the present invention;

Fig. 5 is a schematic diagram illustrating a method for processing MBMS data according to a second embodiment of the present invention;

Fig. 6 is a block diagram illustrating a system according to an embodiment of the present invention;

Fig. 7 is a block diagram illustrating a packet loss checking module according to a first embodiment of the present invention;

Fig. 8 is a block diagram illustrating a packet loss checking module according to a second embodiment of the present invention; and

Fig. 9 is a block diagram illustrating a packet loss checking module according to a third embodiment of the present invention

### DETAILED DESCRIPTION

Embodiments of the present invention provide a method and system for transmitting multimedia broadcast/multicast service. It is checked, during the process of transmitting MBMS data, whether packet loss occurs in the process of transmission. Upon detecting a packet loss, countermeasures are carried out in time, so as to effectively prevent error from spreading and ensure terminals to correctly receive MBMS service data.

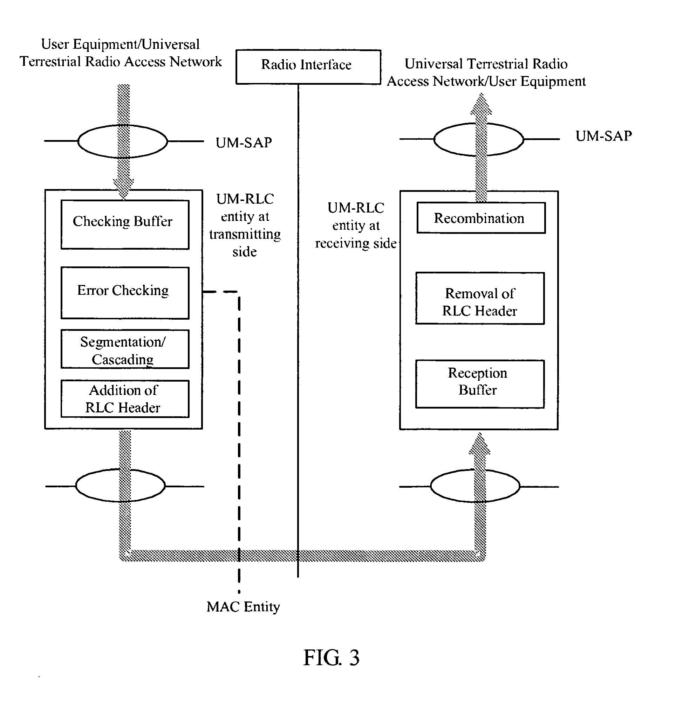

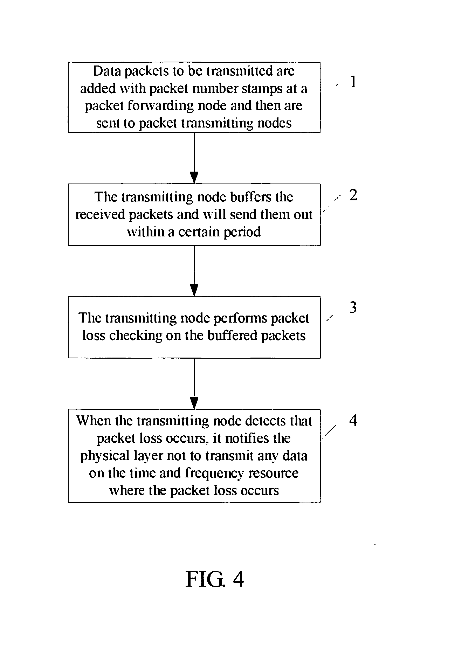

Fig. 3 is a schematic diagram illustrating a method for transmitting MBMS data between an RLC entity at transmitting side and a peer RLC entity at receiving side over the downlink single carrier, according to a first embodiment of the present invention. Fig.4 shows the specific operation flow of the method, comprising the following steps:

Step 1: Data packets to be transmitted are set with packet number stamps at a packet forwarding node, and the data packets are sent to packet transmitting nodes.

Packets to be transmitted to users are set with packet number stamps at the packet forwarding node such as an AGW. The packet number stamps are used as a reference for the transmitting nodes such as eNodeBs to check packet loss.

Step 2: The transmitting node buffers the received packets, and sends them within a certain period.

The transmitting node includes a checking buffer which is new added. It is obvious for those skilled in the art that the checking buffer may be provided in a special layer of the node, such as in a synchronization (SYNC) sub-layer. The checking buffer is used to buffer data sent from the forwarding node in order to avoid missing transmission of packets due to transmission jitter. The checking buffer can accommodate at least two packets.

Packets sent by the forwarding node are first sent into the checking buffer for a temporary buffering. The checking buffer conducts data buffering process and sends the packets in a certain period. After one packet is sent, the checking buffer is updated to receive the next packet.

Step 3: The transmitting node performs packet loss checking on the buffered packets.

The transmitting node includes a packet loss checking module which is new added. It is obvious for those skilled in the art that the packet loss checking module may be provided in a special layer of the node, such as in the synchronization (SYNC) sub-layer. After packets are sent from the checking buffer to the packet loss checking module, the packet loss checking module sorts the received packets according to their packet number stamps. By means of the sorting, the RLC can check whether packet loss occurs.

Before the sorted packets are sent, the packet number stamps are removed from the packets and then the packets are subjected to subsequent process such as segmentation, cascading and so on.

Step 4:Upon detecting a packet loss by the transmitting node, it notifies the physical layer not to transmit any data on the time and frequency resource where the packet loss occurs.

Upon detecting the loss of packet by the transmitting node,, the RLC entity in the transmitting node such as an eNodeB notifies the physical layer not to transmit any data on the time and frequency resource where the packet loss occurs, in which the pilot signals for the lost packets are not transmitted either.

The transmitting node may notify the physical layer directly, or may notify the Media Access Control (MAC) layer, and then the MAC layer notifies the physical layer not to transmit any data. The method for the MAC layer notifying the physical layer includes the following: the MAC layer may notify the physical layer not to transmit any data; or, at the time of packet loss, the MAC layer transmits a set of random data to the physical layer, and notifies the physical layer not to map, after processing the random data, the processed signals to the time and frequency resources where the lost packets are to be received, that is to say, the physical layer maps zero power to the time and frequency resources where the lost packets are to be received.

The transmitting node waits until the arrival of the next time for transmitting the next packet, and transmits the next packet at the same time with other several base stations in several cells.

A specific example is provided hereafter.

When the MBMS service is transmitted in Multi-cell manner, all MBMS packets that each of the cells should transmit are P1, P2, P3, P4, P5 .... The forwarding node adds an additional packet number stamp to each of the packets sent from each of the cells, and then sends the packets to the packet transmitting node. The transmitting node buffers the received packets and then sorts the packets. By means of the sorting, the transmitting node recognizes the loss of some of the packets transmitted by cell 2. As shown in the table below, the packets transmitted by cell 2 are P1, P3, P4, P5, .... At the second time, cell 2 does not transmit any data on the time and frequency resources (data frames). Having sorted the received packets, the transmitting node removes packet headers from the normally received packets, sends the packets, and notifies the physical layer not to transmit any data on the time and frequency resources where the packet loss occurs. The transmitting node waits until the arrival of the next time for transmitting the next packet, and transmits the next packet at the same next time with other base stations in several cells. As shown in the table below, cell 2 waits for the arrival of the third time to transmit the packet 3 at the same frequency and time with other cells.

| Transmitting Time | 1 | 2 | 3 | 4 | 5 |
|---|---|---|---|---|---|
| Cell 1 | P1 | P2 | P3 | P4 | P5 |
| Cell2 | P1 | -- | P3 | P4 | P5 |

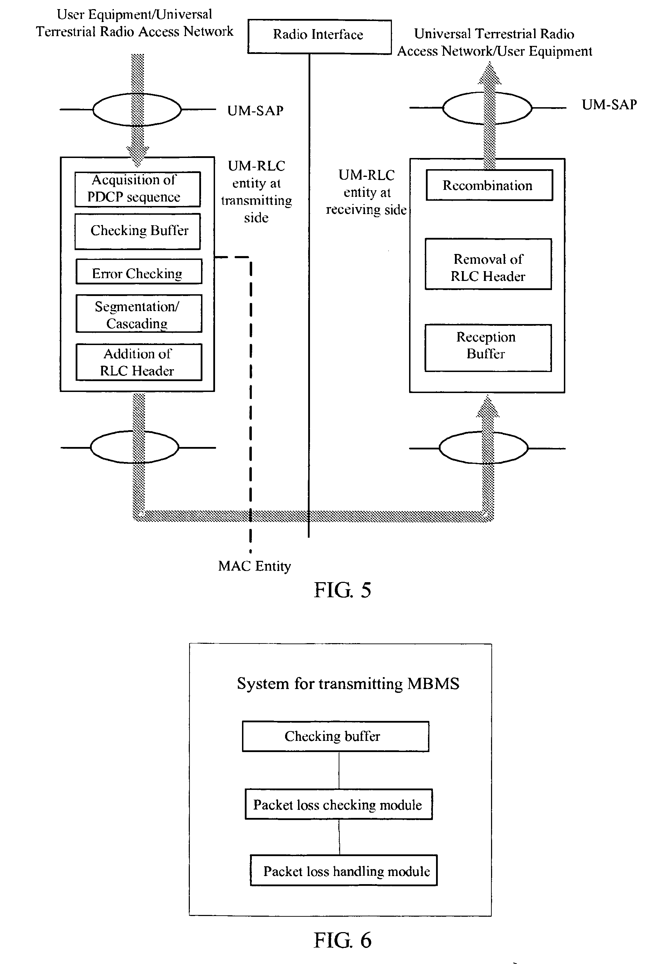

Fig. 5 is a schematic diagram illustrating a method for transmitting MBMS service between an RLC entity at transmitting side and a peer RLC entity at receiving side over the downlink only carrier, according to a second embodiment of the present invention. In this embodiment, an internal header number, i.e. PDCP sequence, of the PDCP entity in the forwarding node is used as a reference for sorting by the transmitting node, that is, after the transmitting node buffers packets received from the forwarding node, the transmitting node identifies the PDCP sequence in the front bits of packets, sorts the received packets according to the PDCP sequence, and recognizes whether any packet is lost according to the sorting. Upon recognizing a packet loss, the same process as described in the first embodiment is conducted subsequently.

A method according to the third embodiment of the present invention is given below. In this embodiment, if packet loss occurs during the transmission of packets from the forwarding node to the transmitting node over the Transport Network (TN), the TN notifies the transmitting node of the length of the lost packet in time. This notification may be sent to the transmitting node along with the packet to be sent to the transmitting node at the next time, and is used to indicate the transmitting node that a packet of length L is lost prior to the reception of current packet by the transmitting node, wherein the length L is the length of the lost packet. If some packet is lost during the TN transmits packets, the TN may know the length of the lost packet.

Upon receiving the nitification, the transmitting node conducts the same process as described in the first embodiment.

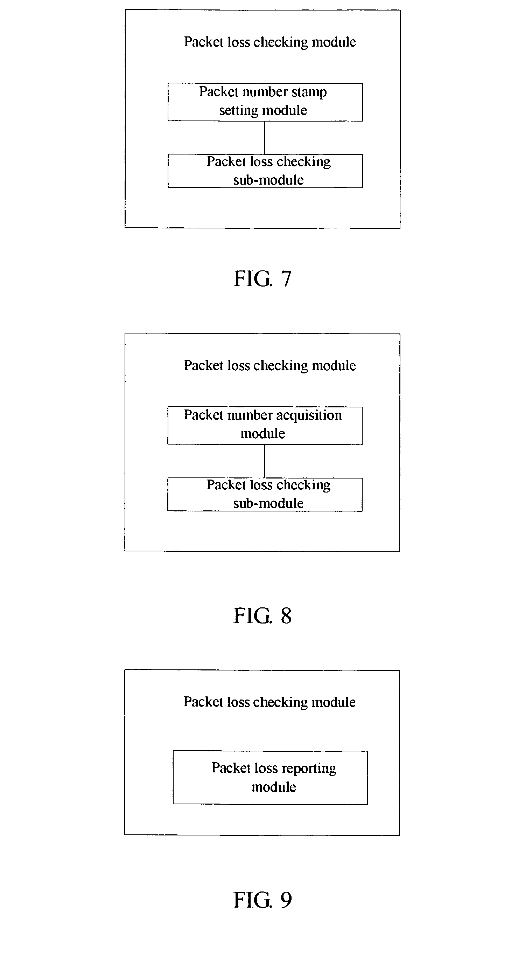

The present invention provides a system for transmitting multimedia broadcast/multicast service. As shown in Fig. 6 illustrating a block diagram of the system, the system includes a packet loss checking module, a checking buffer and a packet loss handling module. It is apparent for those skilled in the art that the packet loss checking module and the checking buffer may be provided in a special layer, such as in SYNC sub-layer. The packet loss checking module checks whether packet loss occurs in the process of transmitting packets. As shown in Fig. 7, the packet loss checking module according to an embodiment includes:

A packet number stamp setting module adapted to set a packet number stamp in the head of a packet. The packet number stamp setting module may be provided at the packet forwarding node, for example, may be provided at a PDCP entity of a forwarding node such as an AGW;

A packet loss checking sub-module adapted to sort received packets according to the packet number stamps set by the packet number stamp setting module, and check whether some packet is lost according to the sorting, so as to determine whether packet loss occurs during packet transmission. The packet loss checking sub-module may be provided at the packet transmitting node, for example, may be provided at an RLC entity of an eNodeB.

As shown in Fig.8, the packet loss checking module according to a second embodiment includes:

A packet number acquisition module adapted to acquire forwarding node sequence numbers carried in received packets; the forwarding node sequence numbers are used as a reference for the packet loss checking module to perform sorting;

A packet loss checking sub-module adapted to sort the received packets according to the forwarding node sequence numbers acquired by the packet number acquisition module, and check whether some packet is lost according to the sorting, so as to determine whether packet loss occurs during packet transmission.

The packet number acquisition module and the packet loss checking sub-module may be provided at the packet transmitting node, for example, may be provided at an RLC entity of an eNodeB.

As shown in Fig.9, the packet loss checking module according to a third embodiment includes:

A packet loss reporting module adapted to report packet loss information to the packet transmitting node upon losing a packet during the transmission of packets between the forwarding node and the transmitting node over a transport network TN. The packet loss reporting module may be provided at the transport network. The packet loss information includes the length of the lost packet, and may be sent to the transmitting node along with the next packet to be transmitted to the transmitting node at the next time.

The packet loss handling module controls the physical layer not to transmit, at the time of packet loss, any data over the time and frequency resource where the packet loss occurs, upon detecting a packet loss during transmission of packets. The method for controlling the physical layer not to transmit any data includes: the packet loss handling module directly notifies the physical layer not to transmit any data; alternatively, the packet loss handling module notifies the MAC layer, then the MAC layer notifies the physical layer not to transmit any data. The method for the MAC layer to notify the physical layer includes: the MAC layer notifies the physical layer not to transmit any data; alternatively, at the time of packet loss, the MAC layer transmits a set of random data to the physical layer, and notifies the physical layer not to map, after processing the random data, the processed signals to the time and frequency resources where the lost packets are to be received, that is to say, the physical layer maps zero power to the time and frequency resources where the lost packets are to be received.

The checking buffer is provided in the transmitting node and is adapted to buffer data sent from the forwarding node to the transmitting node, so as to avoid missing of packets due to transmission jitter. The checking buffer can accommodate at least two packets.

According to the present invention, packet loss checking and handling may be performed timely in the process of MBMS service transmission, so that it is effectively ensured that the terminals can receive MBMS service data correctly and hence ensures smooth radio combining in the physical layer.

The above description only illustrates preferred specific embodiments of the present invention; the scope of the present invention is not limited to the embodiments. It is apparent for those skilled in the art to make variations and replacements on the embodiments without departing from the scope of the present invention, and the invention intends to cover such variations and replacements. The protection scope of the present invention is only defined by the claims.

## Claims

1. A method for transmitting multimedia broadcast/multicast service, wherein a network system providing the multimedia broadcast/multicast service in Multi-cell manner comprises an access gateway and an eNodeB, **characterized in that** the method comprises:
checking, by the eNodeB, whether a packet loss occurs during the transmission of the multimedia broadcast/multicast service from the access gateway to the eNodeB; and
notifying, by the eNodeB, upon losing a packet, a physical layer of the eNodeB not to transmit any data and wait until arrival of a next time for transmitting a next packet at the same time with other several base stations in several cells.

2. The method for transmitting multimedia broadcast/multicast service of claim 1, wherein said checking, by the eNodeB, whether a packet loss occurs comprises:
sorting received packets according to packet number stamps set by the access gateway so as to determine whether a packet loss occurs.

3. The method for transmitting multimedia broadcast/multicast service of claim 2, further comprising:
removing the packet number stamps and transmitting the packets.

4. The method for transmitting multimedia broadcast/multicast service of claim 1, wherein said checking, by the eNodeB, whether a packet loss occurs comprises:
sorting packets according to inherent access gateway sequence numbers in the packets, so as to determine whether packet loss occurs.

5. The method for transmitting multimedia broadcast/multicast service of claim 1, wherein the network system providing the multimedia broadcast/multicast service further comprises a transport network, further comprising:
sending, by the transport network, a notification of packet loss information to the eNodeB during transmission of the packets from the forwarding node to the eNodeB through the transport network.

6. The method for transmitting multimedia broadcast/multicast service of claim 1, further comprising:
buffering, by the eNodeB, received packets before the checking of packet loss.

7. The method for transmitting multimedia broadcast/multicast service of any one of claims 1 to 6, wherein said notifying , by the teNodeB, a physical layer of the eNodeB not to transmit any data comprises:
notifying , by the eNodeB, the physical layer of the eNodeB not to transmit any data over the time and frequency resource used for a transmitting the lost packet ; or
notifying , by the eNodeB, a Media Access Control (MAC) layer, and then notifying, by the MAC layer, the physical layer of the eNodeB not to transmit any data over the time and frequency resource used for a transmitting the lost packet.

8. The method for transmitting multimedia broadcast/multicast service of claim 7, wherein said notifying the physical layer by the MAC layer comprises:
sending, by the MAC layer, no data to the physical layer for the time of a packet loss; or
sending, by the MAC layer, a set of random data to the physical layer, and notifying the physical layer to map, after processing the random data, zero power for the processed random data to the time and frequency resources where the lost packets are to be received.

9. The method for transmitting multimedia broadcast/multicast service of claim 7, wherein said any data further comprises a pilot signal of the lost packet.

10. A system for transmitting multimedia broadcast/multicast service in Multi-cell manner, comprising an access gateway and an eNodeB, **characterized in that** the system further comprises:
a packet loss checking module adapted to check whether packet loss occurs during a transmission of packets from the access gateway to the eNodeB; and
a packet loss handling module adapted to notify, upon checking a loss of packet by the packet loss checking module, a physical layer of the eNodeB not to transmit any data and wait until arrival of a next time for transmitting a next packet at the same time with other several base stations in several cells.

11. The system for transmitting multimedia broadcast/multicast service of claim 10, wherein the packet loss checking module comprises:
a packet number setting module adapted to set packet number stamps in headers of packets to be transmitted; and
a packet loss checking sub-module adapted to sort received packets according to the packet number stamps so as to determine whether a packet loss occurs according to the sorting.

12. The system for transmitting multimedia broadcast/multicast service of claim 10, wherein the packet loss checking module further comprises:
a packet number acquisition module adapted to acquire access gateway sequence numbers of received packets; and
a packet loss checking sub-module adapted to sort the received packets according to the access gateway sequence numbers, so as to determine whether a packet loss occurs during the transmission of the packets according to the sorting.

13. The system for transmitting multimedia broadcast/multicast service of claim 10, wherein the packet loss checking module further comprises:
a packet loss reporting module adapted to report, upon losing a packet during a transmission of packets, packet loss information to the packet transmitting node receiving the packets.

14. The system for transmitting multimedia broadcast/multicast service of any one of claims 10 to 13, wherein the system further comprises:
a checking buffer adapted to buffer packets transmitted from the packet access gateway.

15. The system for transmitting multimedia broadcast/multicast service of claim 14, wherein the checking buffer accommodates at least two packets.

## Patentansprüche

1. Verfahren zum Übertragen des Multimedia-Broadcast/Multicast-Dienstes, wobei ein Netzsystem, das den Multimedia-Broadcast/Multicast-Dienst auf Mehrzellen-Weise bereitstellt, ein Zugangs-Gateway und einen eNodeB umfasst, **dadurch gekennzeichnet, dass** das Verfahren Folgendes umfasst:
Prüfen durch den eNodeB, ob ein Paketverlust während der Übertragung des Multimedia-Broadcast/Multicast-Dienstes von dem Zugangs-Gateway zu dem eNodeB auftritt; und
Benachrichtigen einer Bitübertragungsschicht des eNodeB durch den eNodeB beim Verlust eines Pakets, keinerlei Daten zu übertragen und bis zur Ankunft eines nächsten Mals zum Übertragen eines nächsten Pakets zum selben Zeitpunkt mit anderen mehreren Basisstationen in mehreren Zellen zu warten.

2. Verfahren zum Übertragen des Multimedia-Broadcast/Multicast-Dienstes nach Anspruch 1, wobei das Prüfen durch den eNodeB, ob ein Paketverlust auftritt, Folgendes umfasst:
Sortieren von empfangenen Paketen gemäß durch das Zugangs-Gateway gesetzten Paketzahlstempeln, um so zu bestimmen, ob ein Paketverlust auftritt.

3. Verfahren zum Übertragen des Multimedia-Broadcast/Multicast-Dienstes nach Anspruch 2, das ferner Folgendes umfasst:
Entfernen der Paketzahlstempel und Übertragen der Pakete.

4. Verfahren zum Übertragen des Multimedia-Broadcast/Multicast-Dienstes nach Anspruch 1, wobei das Prüfen durch den eNodeB, ob ein Paketverlust auftritt, Folgendes umfasst:
Sortieren von Paketen gemäß innewohnenden Zugangs-Gateway-Sequenznummern in den Paketen, um so zu bestimmen, ob Paketverlust auftritt.

5. Verfahren zum Übertragen des Multimedia-Broadcast/Multicast-Dienstes nach Anspruch 1, wobei das den Multimedia-Broadcast/Multicast-Dienst bereitstellende Netzsystem ferner ein Transportnetz umfasst, ferner umfassend:
Senden einer Benachrichtigung von Paketverlustinformationen durch das Transportnetz zu dem eNodeB während der Übertragung der Pakete von dem Weiterleitungsknoten zu dem eNodeB durch das Transportnetz.

6. Verfahren zum Übertragen des Multimedia-Broadcast/Multicast-Dienstes nach Anspruch 1, das ferner Folgendes umfasst:
Puffern empfangener Pakete durch den eNodeB vor dem Prüfen auf Paketverlust.

7. Verfahren zum Übertragen des Multimedia-Broadcast/Multicast-Dienstes nach einem der Ansprüche 1 bis 6, wobei das Benachrichtigen einer Bitübertragungsschicht des eNodeB durch den teNodeB, keinerlei Daten zu übertragen, Folgendes umfasst:
Benachrichtigen der Bitübertragungsschicht des eNodeB durch den eNodeB, keinerlei Daten über die zum Übertragen des verlorenen Pakets verwendeten Zeit- und Frequenzbetriebsmittel zu übertragen; oder
Benachrichtigen einer Schicht der Media Access Control bzw. MAC durch den eNodeB und dann Benachrichtigen der Bitübertragungsschicht des eNodeB durch die MAC-Schicht, keinerlei Daten über die zum Übertragen des verlorenen Pakets verwendeten Zeit- und Frequenzbetriebsmittel zu übertragen.

8. Verfahren zum Übertragen des Multimedia-Broadcast/Multicast-Dienstes nach Anspruch 7, wobei das Benachrichtigen der Bitübertragungsschicht durch die MAC-Schicht Folgendes umfasst:
Senden keiner Daten durch die MAC-Schicht zu der Bitübertragungsschicht für die Zeit eines Paketverlusts; oder
Senden einer Menge von Zufallsdaten durch die MAC-Schicht zu der Bitübertragungsschicht und Benachrichtigen der Bitübertragungsschicht, nach dem Verarbeiten der Zufallsdaten null Leistung für die verarbeiteten Zufallsdaten auf die Zeit- und Frequenzbetriebsmittel abzubilden, bei denen die verlorenen Pakete zu empfangen sind.

9. Verfahren zum Übertragen des Multimedia-Broadcast/Multicast-Dienstes nach Anspruch 7, wobei die jeglichen Daten ferner ein Pilotsignal des verlorenen Pakets umfassen.

10. System zum Übertragen des Multimedia-Broadcast/Multicast-Dienstes auf Mehrzellen-Weise, das ein Zugangs-Gateway und einen eNodeB umfasst, **dadurch gekennzeichnet, dass** das System ferner Folgendes umfasst:
ein Paketverlust-Prüfmodul, das dafür ausgelegt ist, zu prüfen, ob Paketverlust während einer Übertragung von Paketen von dem Zugangs-Gateway zu dem eNodeB auftritt; und
ein Modul zum Umgang mit Paketverlust, dass dafür ausgelegt ist, auf das Prüfen eines Paketverlusts durch das Paketverlust-Prüfmodul hin eine Bitübertragungsschicht des eNodeB zu benachrichtigen, keinerlei Daten zu übertragen und bis zu der Ankunft einer nächsten Zeit zum Übertragen eines nächsten Pakets gleichzeitig mit anderen mehreren Basisstationen in mehreren Zellen zu warten.

11. System zum Übertragen des Multimedia-Broadcast/Multicast-Dienstes nach Anspruch 10, wobei das Paketverlust-Prüfmodul Folgendes umfasst:
ein Paketzahl-Setzmodul, das dafür ausgelegt ist, Paketzahlstempel in Kopfteilen von zu übertragenden Paketen zu setzen; und
ein Paketverlust-Prüfsubmodul, das dafür ausgelegt ist, empfangene Pakete gemäß den Paketzahlstempeln zu sortieren, um so gemäß dem Sortieren zu bestimmen, ob ein Paketverlust auftritt.

12. System zum Übertragen des Multimedia-Broadcast/Multicast-Dienstes nach Anspruch 10, wobei das Paketverlust-Prüfmodul ferner Folgendes umfasst:
ein Paketzahl-Beschaffungsmodul, das dafür ausgelegt ist, Zugangs-Gateway-Sequenzzahlen empfangener Pakete zu beschaffen; und
ein Paketverlust-Prüfsubmodul, das dafür ausgelegt ist, die empfangenen Pakete gemäß den Zugangs-Gateway-Sequenzzahlen zu sortieren, um so gemäß dem Sortieren zu bestimmen, ob ein Paketverlust während der Übertragung der Pakete auftritt.

13. System zum Übertragen des Multimedia-Broadcast/Multicast-Dienstes nach Anspruch 10, wobei das Paketverlust-Prüfmodul ferner Folgendes umfasst:
ein Paketverlust-Meldemodul, das dafür ausgelegt ist, beim Verlust eines Pakets während einer Übertragung von Paketen Paketverlustinformationen an den die Pakete empfangenden Paketübertragungsknoten zu melden.

14. System zum Übertragen von Multimedia-Broadcast/Multicast-Dienst nach einem der Ansprüche 10 bis 13, wobei das System ferner Folgendes umfasst:
einen Prüfpuffer, der dafür ausgelegt ist, von dem Paket-Zugangs-Gateway übertragene Pakete zu puffern.

15. System zum Übertragen von Multimedia-Broadcast/Multicast-Dienst nach Anspruch 14, wobei in dem Prüfpuffer mindestens zwei Pakete untergebracht werden können.

## Revendications

1. Procédé de transmission d'un service de diffusion/multidiffusion multimédia, dans lequel un système de réseau fournissant le service de diffusion/multidiffusion multimédia de manière multicellulaire comprend une passerelle d'accès et un noeud eNodeB (Noeud B évolué), **caractérisé en ce que** le procédé comprend :
la vérification, par le noeud eNodeB, du fait qu'il se produit ou non une perte de paquets pendant la transmission du service de diffusion/multidiffusion multimédia de la passerelle d'accès au noeud eNodeB ; et
l'indication, par le noeud eNodeB, lors de la perte d'un paquet, à une couche physique du noeud eNodeB, de ne transmettre aucune donnée et d'attendre l'arrivée d'un instant de transmission suivant d'un paquet suivant en même temps que plusieurs autres stations de base dans plusieurs cellules.

2. Procédé de transmission d'un service de diffusion/multidiffusion multimédia selon la revendication 1, dans lequel ladite vérification, par le noeud eNodeB, du fait qu'il se produit ou non une perte de paquets comprend :
le tri de paquets reçus conformément à des marqueurs de numérotation de paquets définis par la passerelle d'accès afin de déterminer s'il se produit ou non une perte de paquets.

3. Procédé de transmission d'un service de diffusion/multidiffusion multimédia selon la revendication 2, comprenant en outre :
l'élimination des marqueurs de numérotation de paquets et la transmission des paquets.

4. Procédé de transmission d'un service de diffusion/multidiffusion multimédia selon la revendication 1, dans lequel ladite vérification, par le noeud eNodeB, du fait qu'il se produit ou non une perte de paquets comprend :
le tri de paquets conformément à des numéros séquentiels de passerelle d'accès intrinsèques contenus dans les paquets afin de déterminer s'il se produit ou non une perte de paquets.

5. Procédé de transmission d'un service de diffusion/multidiffusion multimédia selon la revendication 1, dans lequel le système de réseau fournissant le service de diffusion/multidiffusion multimédia comprend en outre un réseau de transport, comprenant en outre :
l'envoi au noeud eNodeB, par le réseau de transport, d'une indication d'informations de perte de paquets pendant la transmission des paquets du noeud de réexpédition vers le noeud eNodeB par l'intermédiaire du réseau de transport.

6. Procédé de transmission d'un service de diffusion/multidiffusion multimédia selon la revendication 1, comprenant en outre :
la mise en tampon, par le noeud eNodeB, de paquets reçus avant de vérifier s'il y a perte de paquets.

7. Procédé de transmission d'un service de diffusion/multidiffusion multimédia selon l'une quelconque des revendications 1 à 6, dans lequel ladite indication effectuée par le noeud eNodeB à une couche physique du noeud eNodeB de ne transmettre aucune donnée comprend :
l'indication, par le noeud eNodeB, à la couche physique du noeud eNodeB de ne transmettre aucune donnée par l'intermédiaire de la ressource temporelle et fréquentielle utilisée pour transmettre le paquet perdu ; ou
l'indication, par le noeud eNodeB, à une couche de Contrôle d'Accès au Support (MAC, Media Access Control), puis l'indication par la couche MAC à la couche physique du noeud eNodeB de ne transmettre aucune donnée par l'intermédiaire de la ressource temporelle et fréquentielle utilisée pour transmettre le paquet perdu.

8. Procédé de transmission d'un service de diffusion/multidiffusion multimédia selon la revendication 7, dans lequel ladite indication à la couche physique effectuée par la couche MAC comprend :
le fait que la couche MAC n'envoie aucune donnée à la couche physique pendant la durée d'une perte de paquets ; ou
le fait que la couche MAC envoie un ensemble de données aléatoires à la couche physique, et l'indication à la couche physique d'adapter, après le traitement des données aléatoires, une puissance nulle destinée aux données aléatoires traitées, aux ressources temporelles et fréquentielles avec lesquelles les paquets perdus doivent être reçus.

9. Procédé de transmission d'un service de diffusion/multidiffusion multimédia selon la revendication 7, dans lequel lesdites données quelconques comprennent un signal pilote du paquet perdu.

10. Système de transmission d'un service de diffusion/multidiffusion multimédia de manière multicellulaire, comprenant une passerelle d'accès et un noeud eNodeB, **caractérisé en ce que** le système comprend en outre :
un module de vérification de perte de paquets apte à vérifier s'il se produit ou non une perte de paquets pendant une transmission de paquets de la passerelle d'accès au noeud eNodeB ; et
un module de gestion de perte de paquets apte à indiquer, lorsqu'il est vérifié qu'il y a une perte de paquet par le module de vérification de perte de paquets, à une couche physique du noeud eNodeB, de ne transmettre aucune donnée et d'attendre l'arrivée d'un instant de transmission suivant d'un paquet suivant en même temps que plusieurs autres stations de base dans plusieurs cellules.

11. Système de transmission d'un service de diffusion/multidiffusion multimédia selon la revendication 10, dans lequel le module de vérification de perte de paquets comprend :
un module de définition de numéros de paquets apte à définir des marqueurs de numérotation de paquets dans des en-têtes de paquets à transmettre ; et
un sous-module de vérification de perte de paquets apte à trier les paquets reçus en fonction des marqueurs de numérotation de paquets afin de déterminer s'il se produit ou non une perte de paquets en fonction du tri.

12. Système de transmission d'un service de diffusion/multidiffusion multimédia selon la revendication 10, dans lequel le module de vérification de perte de paquets comprend en outre :
un module d'acquisition de numéros de paquets apte à acquérir des numéros séquentiels de passerelle d'accès des paquets reçus ; et
un sous-module de vérification de perte de paquets apte à trier les paquets reçus en fonction des numéros séquentiels de passerelle d'accès afin de déterminer s'il se produit ou non une perte de paquets pendant la transmission des paquets en fonction du tri.

13. Système de transmission d'un service de diffusion/multidiffusion multimédia selon la revendication 10, dans lequel le module de vérification de perte de paquets comprend en outre :
un module de signalement de perte de paquets apte à signaler, lors de la perte d'un paquet pendant la transmission de paquets, des informations de perte de paquets au noeud de transmission de paquets recevant les paquets.

14. Système de transmission d'un service de diffusion/multidiffusion multimédia selon l'une quelconque des revendications 10 à 13, le système comprenant en outre :
un tampon de vérification apte à mettre en tampon des paquets transmis depuis la passerelle d'accès de paquets.

15. Système de transmission d'un service de diffusion/multidiffusion multimédia selon la revendication 14, dans lequel le tampon de vérification accepte au moins deux paquets.
